# EUROPEAN PATENT APPLICATION

(11) **EP 2 128 648 A1**
(43) Date of publication of application: **02.12.2009**
(21) Application number: 08009652.2
(22) Date of filing: 27.05.2008
(51) Int. Cl.: G01S 13/88, G01S 13/93, A61H 3/06

(54) **A portable collision detection and warning component connectable to portable audio devices**

(71) Applicant: SIEMENS AKTIENGESELLSCHAFT, 80333 München (DE)
(72) Inventor: Boulila, Naoufel, Dr., 80809 München (DE)

(57) **Abstract**

The invention relates to a portable collision detection and warning component (10), having an object detection unit for detecting the movement of vehicles in the environment of a user carrying said component (10), a processing unit connected to said object detection unit for receiving vehicle movement signals, said processing unit being adapted to evaluate said vehicle movement signals and to generate warning signals (22), said warning signals (22) being indicative for said collision probability, and a communication interface for connecting portable audio devices (30), wherein said processing unit is adapted to control said portable audio device (30) via said communication interface for outputting said warning signals (22) indicative for said collision probability. The invention further relates to a system having said portable collision detection and warning component (10) and a method of collision detecting and warning, respectively.

## Description

Present invention relates to a collision detection and warning component according to Claim 1 and a system composed of such a component and a portable audio device according to Claims 8 or 9. The invention furthermore relates to a method of collision detecting and warning according to Claim 10 and the use of a collision detection and warning component according to Claim 16.

Nowadays, portable electronic devices such as blackberries, mobile phones, and music players have become ubiquitous. On the one hand, people cannot do without; on the other hand, these devices can be the roots of many risks.

Portable electronic devices and especially portable music players are very distracting in a way that when using them people are unaware of the outside world and walk into oncoming traffic. The actual situation is that it is up to the individuals when driving and pedestrians when crossing the streets, to be aware of their surroundings and to ensure that they are fully attentive. Unluckily, this led to a number of fatal accidents on city streets. Critics say people listening to music put themselves at greater risks of accidents.

Up to now, this problem is being solved through the introduction of legislations and enforcing laws to ban the use of electronic gadgets while crossing the streets. Recently, several US states such as New York, California, and in Europe, the United Kingdom, have proposed laws banning people from crossing the street while using electronic gadgets such as iPods, and mp3 music players. However, this does not necessarily ensure that people are acting accordingly.

In view of the above, it is therefore an object of present invention to provide for a technical solution to this problem, which is simple, efficient and reliable, and which may be easily understood by a user same as feasible at low costs.

Such object is solved by a portable collision detection and warning component, having an object detection unit for detecting the movement of vehicles in the environment of a user carrying said component, a processing unit connected to said object detection unit for receiving vehicle movement signals, said processing unit being adapted to evaluate said vehicle movement signals and to generate warning signals, said warning signals being indicative for said collision probability, and a communication interface for connecting portable audio devices, wherein said processing unit is adapted to control said portable audio device via said communication interface for outputting said warning signals indicative for said collision probability.

An important point with said component is that instead of relying on laws to stop people using electronic gadgets and individual awareness to ensure their own safety and the safety of the people around, we present a technical solution to this problem.

The proposed solution consists in an electronic component called iCAwareness (integrated Component Awareness) that can increase the awareness of the individuals, carrying electronic portable devices and in particular the portable music players, of their surrounding and communicate warnings whenever it detects a possible proximate danger such as a collision with an object in motion.

It may be used as an add-on to any kind of portable audio devices currently available, or being integrated to such devices in the future.

We further note that the solution applies to any electronic portable devices producing audio output, especially ones having a music playing feature, and in particular portable music players such as iPods and mp3/mp4 players. However, the component of present invention may of course also be added to mobile phones, especially when used with a headset, or to hearing devices of elderly persons.

Since legislations and laws banning the use of portable device cannot ensure that people will respect them and guaranty the safety of the individuals. The technical solution according to the invention can support minimizing risks and ensure the safety of the individuals using the gadgets.

Aspects of the collision detection and warning component according to the invention are described in Claims 2 to 7.

In one aspect of present invention the processing unit is adapted to evaluate said collision probability based on strength of the vehicle movement signals. Thus, signals do not need to be digitised, which is timesaving and requires an analogue - and low-cost - circuit only.

In another aspect of present invention the processing unit is adapted to associate said vehicle movement signals to predefined alarm levels and to generate level dependent warning signals. This enables the user of intuitively and thus easily grasping the degree of danger, which he or she is actually exposed to. The user may thus act intuitively to escape the risky situation.

In a further aspect of present invention as for a warning signal, a level of audio volume is controlled to be changed away from a level adjusted by the user and/or a notification sound is controlled to be generated. In case a level of audio volume is reduced, the noises present in the environment of the user are better audible. The other way round, if the level of audio volume is raised, the user is prompted to a danger independently of the noises around. Such effect may also be achieved when a (additional) sound is controlled to be generated. Such sound may be superimposed to a level of audio volume and thus attracts the users attention.

In order to reliably point at the risk, it is preferred to control a level of audio volume to be lowered and/or to control a notification sound to be more audible whenever collision probability is increased. Making a notification sound more audible may comprise raising the level of volume thereof and/or raising its frequency to higher level, such that the user is immediately aware of the danger he or she is exposed to.

In a still further aspect of present invention a self motion detection unit for detecting the movement of the user carrying said component is provided, said self motion detection unit being adapted to activate said object detection unit whenever the user moves. That is, the collision detecting and warning function is in operation only when the user in fact may put himself or herself at a risk of colliding by own movement. False alarms will thus not occur when the user is e.g. waiting close to a street with moving vehicles. Since reliability of the warning signals is thus increased, the user will not tend to disregard warning signals, which in turn increases acceptance of the inventive component. Since furthermore a required energy supply is not needed with the collision detecting and warning function being deactivated, the warning function is very efficient in power consumption. This again extends the operating time of such component, which protects the user over a longer time.

In an additional aspect of present invention at least parts of said object detection unit, said processing unit and/or said self motion detection unit are formed to be an integrated chip component. Due to miniaturisation of such units, the user is not subjected to the burden of carrying along a heavy and large add-on to a portable audio device. Thus, on the one hand, acceptance of a respective collision detection and warning component is increased and costs are reduced.

The object of present invention is also solved by a system composed of a collision detection and warning component as described above and a portable audio device, said collision detection and warning component being detachably connectable to said portable audio device via said communication interface. Such system may include any kind of portable device actually available on the market having audio output, especially mobile phones, PDAs (Personal Digital Assistants) and music players. In this case, the collision detection and warning component is made an all-purpose extra component connectable to any of such portable audio devices, which gives it a wide and flexible range of application.

As an alternative, the object of present invention is also solved by a system composed of a collision detection and warning component as described above and a portable audio device, said collision detection and warning component being an integrated part of said portable audio device connected thereto via said communication interface. In this case, the integrated chip may be used as a standard build-in component to portable audio devices in the future.

In view of such alternatives, knowing that there is almost infinity of electronic mobile devices on the planet, the solution if implemented are very beneficial and could provide a huge potential of influencing the manufacturing of these devices on the market. The law can also enforce the deployment of the solutions we present here in a form of a component chip on e.g. a portable music player or during the manufacturing process of mobile devices.

The object of present invention is furthermore solved by a method of collision detecting and warning, wherein the movement of vehicles in the environment of a user is detected, a collision probability is evaluated based on vehicle movement signals, and warning signals are communicated to the user, said warning signals being indicative for said collision probability.

An essential point with said method is that it is simply structured and may be easily implemented, whether full or partially in hardware, firmware or software. As an effect, such method is very efficient and reliable to protect the user from potential collisions.

Aspects of the collision detection and warning method according to the invention are described in Claims 11 to 15, which basically reflect the method steps establishing the same advantages as already mentioned in corresponding aspects of the component.

In general, a collision detection and warning component according to present invention may be used to control any kind of mobile device, provided respective amendments are made to the processing unit. For instance, a mobile phone may also be controlled by the component to output a mechanical or optical warning signal. However, the collision detection and warning component according to present invention is preferably used for controlling audio output of a portable audio devices, which is most efficient for pointing the user at a risk.

Present invention will be described in more detail by means of an example referring to the related figures, wherein:
- Figure 1: shows a collision detection and warning component according to present invention as a standalone component, which can be plugged into standard portable devices;
- Figure 2: shows a collision detection and warning component according to present invention formed as a chip component, which can be integrated into portable devices during the manufacturing process;
- Figure 3: shows the plugging in of the component of figure 1 into a portable music player;
- Figure 4: shows an UML-diagram representing the composition of the collision detection and warning component according to present invention;
- Figure 5: shows a single object in motion detection by a collision detection and warning component according to present invention;
- Figure 6: shows the detection of several objects in motion at the same time by a collision detection and warning component according to present invention;
- Figure 7: shows a motion detection workflow made by a collision detection and warning component according to present invention, and
- Figure 8: shows an overview of the interaction of the collision detection and warning component according to present invention, the surrounding and various portable devices.

Generally, in the figures, same parts or parts of same function are denoted by same reference numerals.

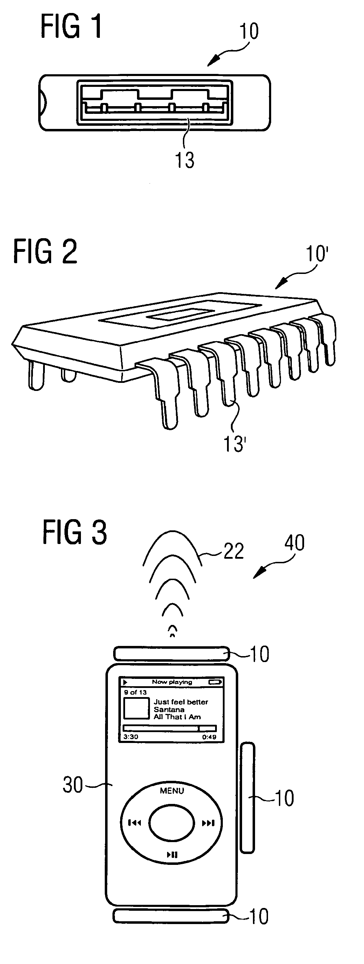

As can be seen from figures 1 and 2, the iCAwareness component 10, 10' can take two possible forms.

Figure 1 shows a collision detection and warning component 10 according to present invention as a standalone component, which can be plugged into standard portable devices via a standard communication interface 13. Thus, the iCAwareness component 10 takes the form of a self-contained electronic module that can be plugged into e.g. any mobile music player. Such module may be added to a wide range of portable devices via the standard interface 13 and thus provides for later upgrade of such devices.

Figure 2 shows a collision detection and warning component 10' according to present invention formed as a chip component, which can be integrated into portable devices during the manufacturing process via a communication interface 13' formed as a pin connection. This way, the iCAwareness component 10' takes the form of an integrated chip component to portable devices, which can be manufactured as a built-in component of the player itself. Such solution does not need any extra attachments and thus presents a very compact and lightweight solution. Prospective legal provisions may also require such solution.

Figure 3 shows the plugging in of the component 10 of figure 1 into a portable music player 30, which broadcasts warning signals 21 indicative for collision probability. In such system 40 composed of a standard portable music player 30 an iCAwareness component or module 10, the latter component may be placed (or integrated) at the top, the side or the bottom of the player 30. Since iCAwareness does not require too much space, any placement will do without reducing manageability of the player 30. However, placement at the top or the bottom may be preferred in view of better pocketing.

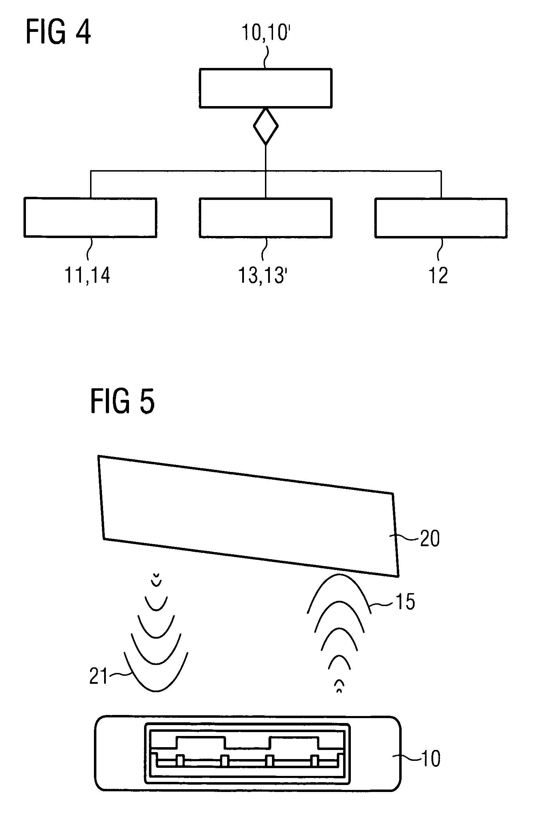

Figure 4 shows an UML-diagram representing the composition of the collision detection and warning component 10, 10' according to present invention. The iCAwareness component 10, 10' is composed of three main components, namely a communication component (the communication interface 13, 13'), a detection component (an object detection unit 11 and optionally a self motion detection unit 14) and a processing component (a processing unit 12).

The communication component, also called communication interface 13, 13' as it interfaces with the electronic portable device and the surrounding world, presents an interface that enables the interaction with the surrounding and the communication with existing portable music players.

The detection component is composed itself of two main units. First, a self-motion unit 14, which detects the motion of the device itself. If the device is in motion, it is very likely that the owner is also moving. Whether the owner is biking or moving on feet is not an issue. Thus, unit 14 ensures that the proper state of the iCAwareness component 10, 10' is set to be switched off or on. Second, an object detection unit 11, which acts as mini radar that detects objects in motion which can be dangerous to collide with.

Figure 5 shows a single object in motion detection by a collision detection and warning component 10 according to present invention. Detection signals 15 are sent by the iCAwareness component 10 and received back to be vehicle or object movement signals 21. According to how far an object 20 is, the strength of the signal 15 can be modified automatically by the iCAwareness component 10. Initially, signal strength is configured to detect objects 20, which are in the surrounding of some meters. Five to ten metres could be a reasonable configuration parameter. Accordingly, objects 20 may be reliably detected, which presents a danger when colliding therewith.

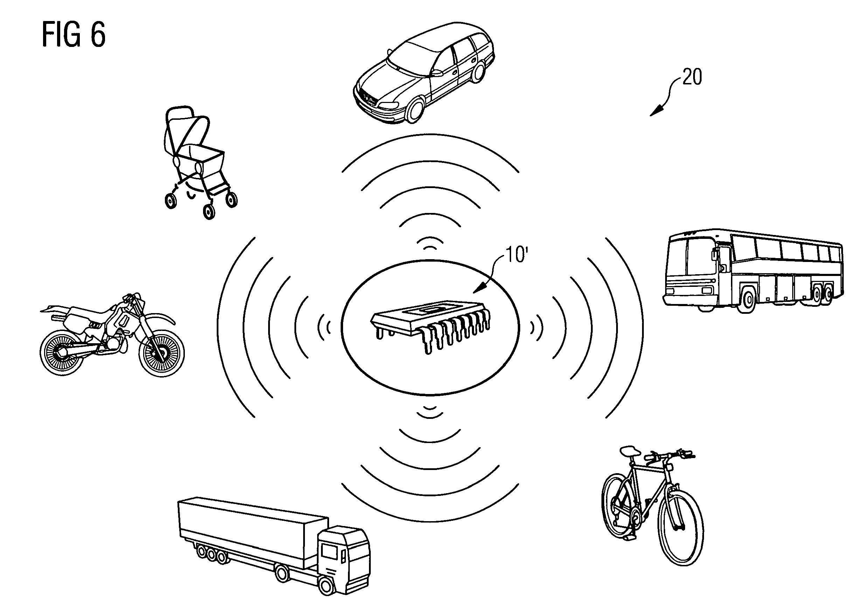

Figure 6 shows the detection of several objects 20 in motion at the same time by a collision detection and warning component 10' according to present invention. The detection component acts as mini-radar in tracking several objects 20 in motion. In case of several objects 20 moving around, it is enough that one of them is detected. If one object in motion is not detected because it is far enough not to be detected, the iCAwareness component 10' detects several objects 20 in motion, detects the nearest one and communicates the degree of alarm to a portable device.

The processing component 12, also called processing unit 12 is explained by way of the following.

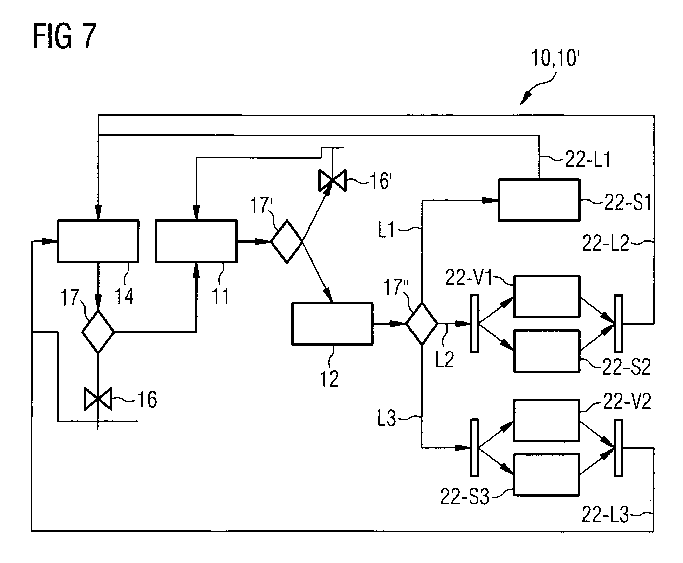

Figure 7 shows a motion detection workflow made by a collision detection and warning component 10, 10' according to present invention. Such motion detection workflow is implemented in the processing unit 12 of the iCAwareness component 10, 10' and is based on signal strength and the various definitions of emergency levels. The processing unit 12 receives the input of an object detection unit 11, which is activated by a self-motion detection unit 14 whenever the user moves.

Switch 17 is triggered by timer 16 in periods of preferably every 10 s for activating object detection unit 11 whenever self-motion is detected by self-motion detection unit 14. Switch 17' is then triggered by timer 16' preferably every 10 s for communicating object detection to processing unit 12 or, if there is no object detected, to stand by for another 10 s.

The processing unit 12 includes the intelligence of the iCAwarenes component 10, 10' to decide which signal received corresponds to which degree of alarm communicated to a electronic portable device. The alarm levels define the degree of emergency and the corresponding actions to take, which is communicated to an electronic portable device. In this example, three alarm levels are defined according to the signal received back, level L1 (code yellow), level L2(code orange), level L3 (code red). If the signal strength is null or very low, which may be defined respectively, there is no action taken.

Alarm level L1 indicates that the signal strength corresponds to a low alarm level (yellow) and the action taken is only about sending a warning signal 22-L1, which is a smooth sound notification to the current user to make him aware that an object might be coming nearer. Such notification sound is controlled by unit 22-S1, which is triggered by the processing unit 12 via switch 17'' accordingly.

Alarm level L2 indicates that signal strength corresponds to a middle alarm level (orange) and the action taken is to lower the volume of the music currently played and to send a sound notification, which is clearly audible. Unit 22-V1 for the lowering of volume and 22-S2 for the sound notification, respectively, generates the resulting warning signal 22-L2.

Alarm level L3 indicates that the signal strength corresponds to a high alarm level (red) and the action taken is to mute completely the volume of e.g. a music currently played and to send a sound notification, which means a real danger of collision with a moving object is going to happen. Unit 22-V2 for the muting of volume and 22-S3 for the continuous sound notification, respectively, generates the resulting warning signal 22-L3.

The concept of the solution is briefly shown in overview in the following figure.

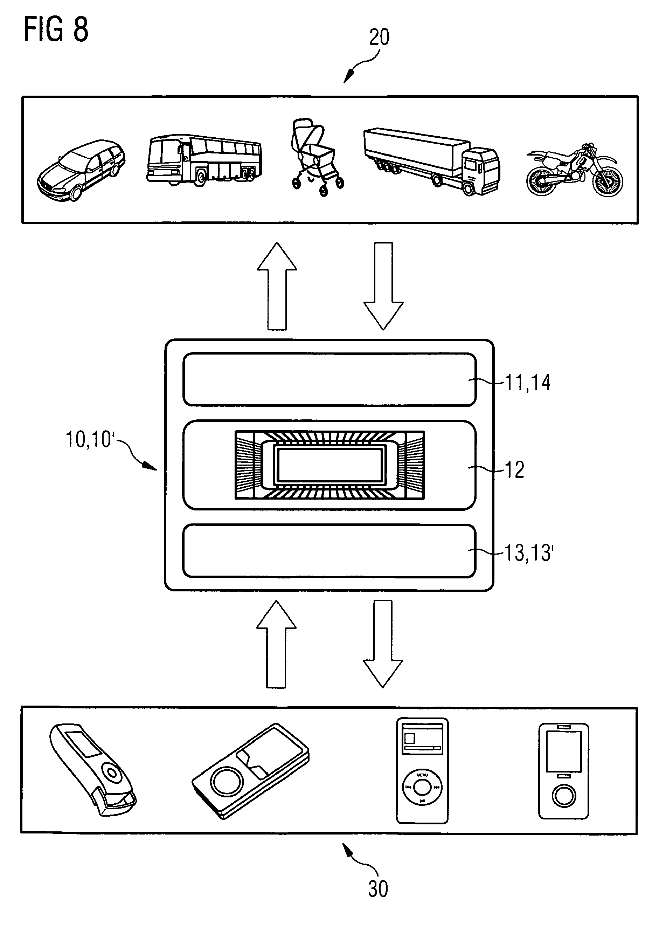

Figure 8 shows an overview of the interaction of the collision detection and warning component 10, 10' according to present invention, surrounding objects 20 and various portable devices or media gadgets 30. Basically, such iCAwareness component 10, 10' includes a processing unit 12, which on the one hand is gathering information about moving objects 20 via a surrounding interface. This interface again includes an object detection unit 11 and - optionally - a self-motion detection unit as described above. On the other hand, the processing unit 12 communicates via an interface 13, 13' with various portable devices 30 mountable to the component 10, 10'.

In the context described here, many requirements have been considered to define the solution in the form of a hardware and software components. For instance, iCAwareness adapts to the traffic or no traffic situation. This means that the component 10, 10' detects self-motion and changes status to active only when the user is moving around, like walking or running. When the user is at rest, e.g. sitting, there is no need for the component 10, 10' to be active, and it moves to the status inactive. The user further has the possibility to force the iCAwareness component 10, 10' to be completely switched off. Furthermore, iCAwareness detects and tracks moving objects, especially vehicles, human beings or animals are of lower concern. In addition, iCAwareness ensures compatibility with existing and future portable devices. A firmware or software update for the target portable player to communicate properly with iCAwareness may be easily made. Since iCAwareness also relies on a standard interface 13, 13', a variety of existing portable devices may be provided therewith.

## Claims

1. A portable collision detection and warning component (10; 10'), having:
an object detection unit (11) for detecting the movement of vehicles (20) in the environment of a user carrying said component (10; 10');
a processing unit (12) connected to said object detection unit (11) for receiving vehicle movement signals (21), said processing unit (12) being adapted to evaluate said vehicle movement signals (21) and to generate warning signals (22), said warning signals (22) being indicative for said collision probability, and
a communication interface (13; 13') for connecting portable audio devices (30), wherein said processing unit (12) is adapted to control said portable audio device (30) via said communication interface (13; 13') for outputting said warning signals (22) indicative for said collision probability.

2. Component (10; 10') according to Claim 1, wherein said processing unit (12) is adapted to evaluate said collision probability based on a strength of said vehicle movement signals (21).

3. Component (10; 10') according to Claim 1 or 2, wherein said processing unit (12) is adapted to associate said vehicle movement signals (21) to predefined alarm levels (L1 ... L3) and to generate level dependent warning signals (22-L1 ... 22-L3).

4. Component (10; 10') according to any one of the preceding Claims, wherein as a warning signal (22), a level of audio volume (22-V1, 22-V2) is controlled to be changed away from a level adjusted by the user and/or a notification sound is controlled to be generated.

5. Component (10; 10') according to Claim 4, wherein a level of audio volume (22-V1, 22-V2) is controlled to be lowered and/or a notification sound is controlled to be more audible whenever collision probability is increased.

6. Component (10; 10') according to any one of the preceding Claims, further having a self motion detection unit (14) for detecting the movement of the user carrying said component (10; 10'), said self motion detection unit (14) being adapted to activate said object detection unit (11) whenever the user moves.

7. Component (10; 10') according to any one of the preceding Claims, wherein at least parts of said object detection unit (11), said processing unit (12) and/or said self motion detection unit (14) are formed to be an integrated chip component.

8. A system (40) composed of a collision detection and warning component (10; 10') according to any one of the preceding Claims and a portable audio device (30), said collision detection and warning component (10) being detachably connectable to said portable audio device (30) via said communication interface (13).

9. A system (40) composed of a collision detection and warning component (10') according to any one of Claims 1 to 7 and a portable audio device (30), said collision detection and warning component (10') being an integrated part of said portable audio device (30) connected thereto via said communication interface (13').

10. Method of collision detecting and warning, wherein the movement of vehicles (20) in the environment of a user is detected, a collision probability is evaluated based on vehicle movement signals (21), and warning signals (22) are communicated to the user, said warning signals (22) being indicative for said collision probability.

11. Method according to Claim 10, wherein said collision probability is evaluated based on a strength of the vehicle movement signals (21).

12. Method according to Claim 10 or 11, wherein said vehicle movement signals (21) are associated to predefined alarm levels (L1 ... L3) and level dependent warning signals (22-L1 ... 22-L3) are generated.

13. Method according to any one of Claims 10 to 12, wherein as a warning signal (22), a level of audio volume (22-V1, 22-V2) is changed away from the level adjusted by the user and/or a notification sound is generated.

14. Method according to any one of Claims 10 to 13, wherein a level of audio volume (22-V1, 22-V2) is lowered and/or a notification sound is made more audible when said collision probability increases.

15. Method according to any one of Claims 10 to 14, wherein detection of vehicle movement is activated whenever the user is moving.

16. Use of a collision detection and warning component (10; 10') according to any one of Claims 1 to 7 for controlling audio output of a portable audio device (30).
